# FASCICULE DE BREVET EUROPEEN

(11) **EP 0 402 243 B1**
(45) Date de publication et mention de la délivrance du brevet: **05.01.1994**
(21) Numéro de dépôt: 90401528.6
(22) Date de dépôt: 06.06.1990
(51) Int. Cl.: B01D 29/27, B01D 29/90, B01D 29/96

(54) **Dispositif de filtration destiné notament à l'épuration des eaux de piscine**
Filteranlage, insbesondere zur Reinigung von Schwimmbeckenwasser
Filtering device particularly for the purification of swimming pool water

(30) Priorité: 09.06.1989 FR 8907692
(43) Date de publication de la demande: 12.12.1990
(73) Titulaire: Guyot, Jean-François, F-51500 Rilly-la-Montagne (FR)
(72) Inventeur: Guyot, Jean-François, F-51500 Rilly-la-Montagne (FR)
(74) Mandataire: Hasenrader, Hubert

(56) Documents cités:
- DE-A- 1 517 687
- FR-A- 2 174 790
- FR-A- 2 383 130
- FR-E- 1 374
- US-A- 2 751 084
- US-A- 3 984 330

## Description

La présente invention concerne un dispositif de filtration destiné notamment à l'épuration des eaux de piscine et du type comportant :
- une chambre de filtration délimitée par une paroi latérale cylindrique et deux faces d'extrémité opposées,
- un conduit d'alimentation et un conduit d'évacuation débouchant dans ladite chambre de filtration, le conduit d'alimentation débouchant sensiblement au centre de l'une desdites faces d'extrémité, et
- un élément filtrant interposé dans ladite chambre de filtration entre le conduit d'alimentation et le conduit d'évacuation, à travers lequel circulent les eaux à traiter introduites dans ladite chambre de filtration par ledit conduit d'alimentation et évacuées après traitement par ledit conduit d'évacuation, l'autre desdites faces d'extrémité étant séparable pour permettre l'accès à la chambre de filtration pour changer ledit élément filtrant.

Aujourd'hui, la très grande majorité des eaux de piscine est épurée par des filtres à sable ; le procédé est très simple et très économique mais nécessite un appareillage volumineux pour assurer un débit d'eau suffisant et, d'autre part, il n'assure pas une grande finesse de filtration.

Pour les petites piscines, on utilise souvent des filtres à cartouche constitués de tissus tendus sur des armatures disposées en rayons de roue par rapport à un axe central, la filtration s'exerce de l'extérieur vers l'intérieur de la cartouche.

Les filtres à diatomées actuellement commercialisés ont une structure assez voisine des filtres à cartouche. Ils comprennent des plateaux en tissu synthétique tendu sur une armature et accolés les uns aux autres en accordéon pour multiplier la surface de filtration.

Certains dispositifs assurant le lavage du fond et des parois de piscine comportent des sacs filtrants en tissu à maille large dont le rôle est de retenir les feuilles et autres débris qui sinon iraient encombrer le préfiltre de la pompe et non d'épurer les eaux de la piscine.

Ces divers filtres présentent des inconvénients. Les filtres à sable nécessitent un tuyau d'évacuation à l'égout et des vannes multi-voies pour permettre le lavage du filtre à contre-courant. Les filtres à cartouche et à diatomées nécessitant des appareillages de grande dimension pour permettre un grand débit de façon à renouveler l'eau de la piscine dans un cycle d'environ six heures. Ces appareillages sont donc coûteux, et de plus les tissus étant en matière synthétique fonctionnent comme des grilles à petite maille et le chevauchement de deux plis empêche l'eau de passer.

Le but de la présente invention est de proposer un dispositif de filtration du type mentionné qui pallie ces inconvénients et qui permette, entre autres, une grande finesse de filtration et une grande surface de filtration dans un volume réduit et à un prix de revient faible.

Le but est atteint selon l'invention par le fait que le dispositif de filtration est caractérisé en ce qu'il comprend en plus :
- un tuyau d'admission prolongeant le conduit d'admission dans la chambre de filtration et dont l'extrémité libre se trouve au voisinage de l'autre desdites faces d'extrémité,
- un grillage à grosse maille de forme cylindrique interposé axialement entre ledit tuyau d'admission et la paroi latérale de ladite chambre de filtration et partageant celle-ci en un premier espace annulaire délimité par ledit tuyau d'admission et ledit grillage et en un deuxième espace annulaire délimité par ledit grillage et ladite paroi latérale et dans lequel débouche le conduit d'évacuation,
- en ce que l'élément filtrant est constitué d'un sac en tissu présentant une surface de filtration supérieure à la surface de la paroi interne dudit grillage et contenant presque en totalité un tube de guidage dont le diamètre intérieur est légèrement supérieur au diamètre extérieur du tuyau d'admission, dont la longueur est égale ou légèrement inférieure à la longueur du tuyau d'admission et dont une partie d'extrémité sort par l'ouverture dudit sac, le collet dudit sac entourant ladite ouverture étant appliqué contre ledit tube de guidage par des moyens de fermeture et d'ancrage,
- et en ce que ledit élément filtrant est placé dans ledit premier espace annulaire de telle manière que ledit tube de guidage entoure ledit tuyau d'admission et que le fond du sac soit disposé entre l'extrémité libre du tuyau d'admission et l'autre desdites faces d'extrémité.

Grâce à cette disposition, l'élément filtrant présente une grande surface de filtration dans un faible volume, car le sac peut être tassé en accordéon à l'intérieur du premier espace annulaire, et s'il est en fibres naturelles, il se comporte comme une mèche et non plus simplement comme les mailles d'une grille, ce qui permet à l'eau de traverser les plis.

Le dispositif permet ainsi un grand débit avec un fonctionnement en basse pression. L'élément filtrant peut facilement être sorti du dispositif et le sac peut être retourné et lavé dans une machine à laver. Enfin, par adjonction de poudre de diatomée, l'élément filtrant présente une grande finesse de filtration.

De façon avantageuse le sac est en fibres naturelles et est réalisé dans un tissu éponge. Le tissu éponge présente l'avantage d'augmenter considérablement la surface de filtration d'un côté et de l'autre du sac.

Les moyens de fermeture et d'ancrage permettant d'appliquer le collet du sac contre le tube de guidage comportent au moins une protubérance annulaire formée sur la paroi externe du tube de guidage et servant d'épaulement audit collet maintenu, serré contre le tube de guidage par un cordon de fermeture.

De façon avantageuse deux protubérances voisines, délimitant entre elles une gorge annulaire, sont formées sur le tube de guidage et le collet du sac loge dans ladite gorge. Les moyens de fermeture et d'ancrage peuvent comporter en plus au moins une patte souple fixée par l'un de ses bouts sur la partie d'extrémité du tube de guidage et solidaire à l'autre bout d'un deuxième cordon de serrage, ladite patte souple pouvant être rabattue sur le collet du sac.

Le tuyau d'alimentation et le tube de guidage peuvent comporter des ouvertures de passage ménagées en correspondance sur toute leur longueur.

De préférence le conduit d'évacuation débouche sur le bord de la face d'extrémité portant le tuyau d'alimentation et il est prolongé dans le deuxième espace annulaire par un tube dont le diamètre décroît à partir de ladite face d'extrémité et qui comporte dans sa paroi une pluralité d'orifices d'évacuation.

D'autres caractéristiques et avantages de l'invention apparaîtront à la lecture de la description de plusieurs modes de réalisation faite ci-après à titre d'exemple et en référence au dessin annexé dans lequel :
- la figure 1 représente une vue en perspective d'un premier mode de réalisation du dispositif de filtration selon l'invention,
- la figure 2 est une coupe longitudinale du dispositif,
- la figure 3 est une coupe transversale du dispositif selon la ligne III-III de la figure 2,
- la figure 4 représente un mode de réalisation du sac de filtration,
- la figure 5 est une variante du- sac de filtration,
- la figure 6 montre en détail un premier type du dispositif d'ancrage du sac sur le tube de guidage,
- la figure 7 montre en détail un deuxième type du dispositif d'ancrage,
- la figure 8 montre en détail un troisième type d'ancrage du sac sur le tube de guidage, le sac pouvant être ouvert par son fond,
- la figure 9 est une variante du dispositif de filtration,
- la figure 10 représente un deuxième mode de réalisation du dispositif de filtration destiné à être utilisé en position verticale.

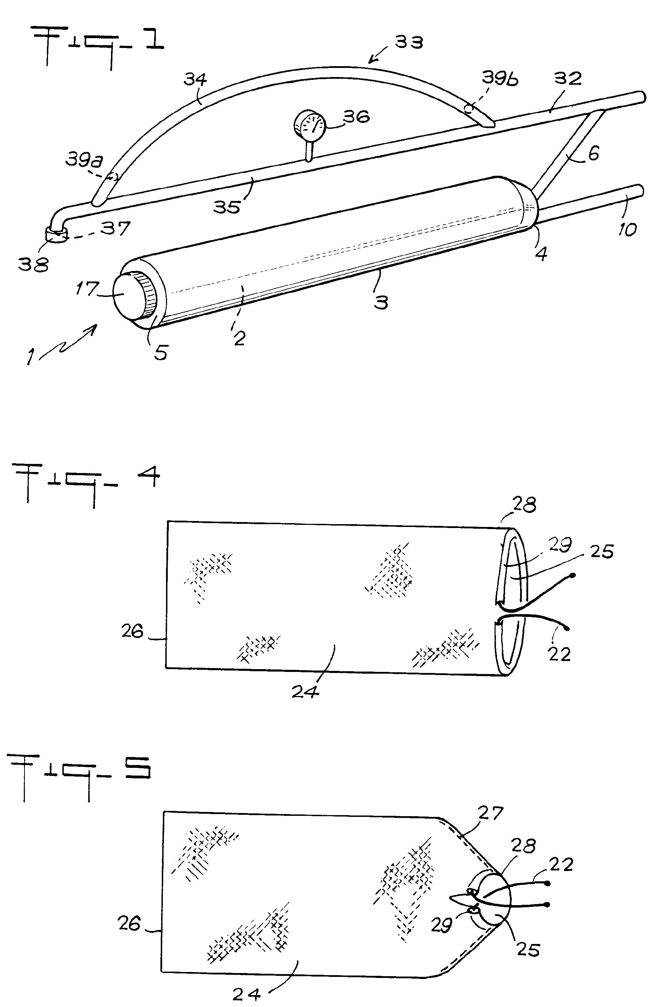

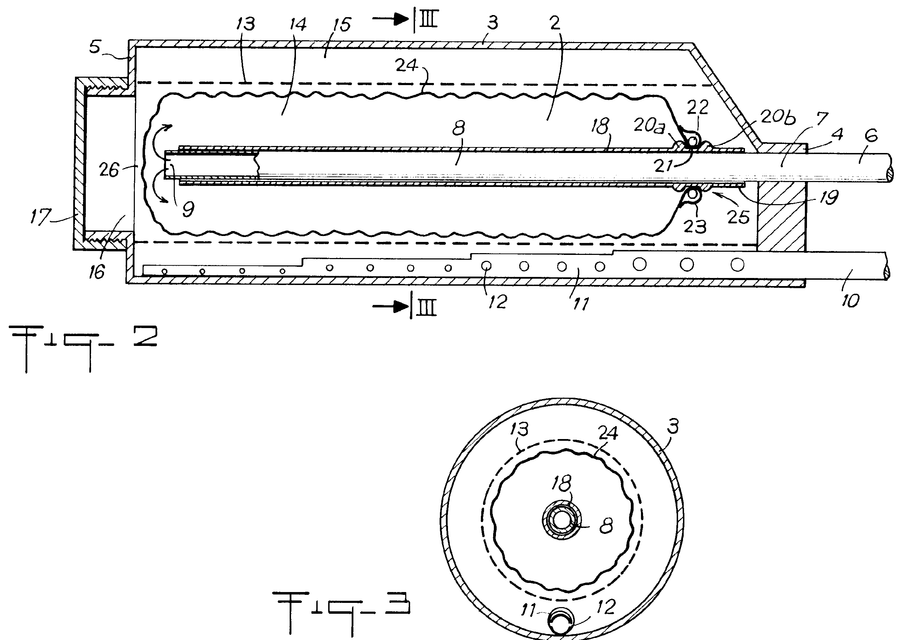

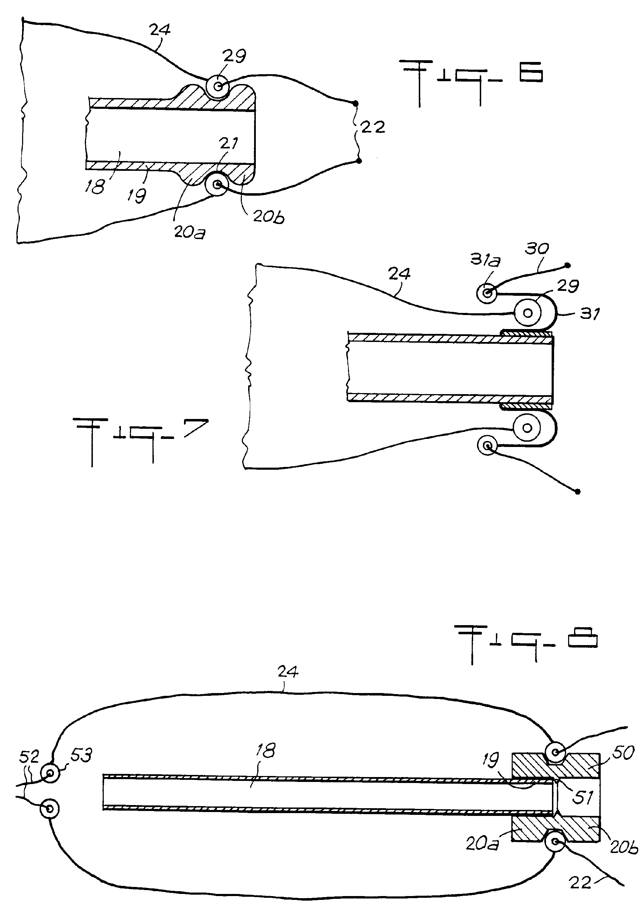

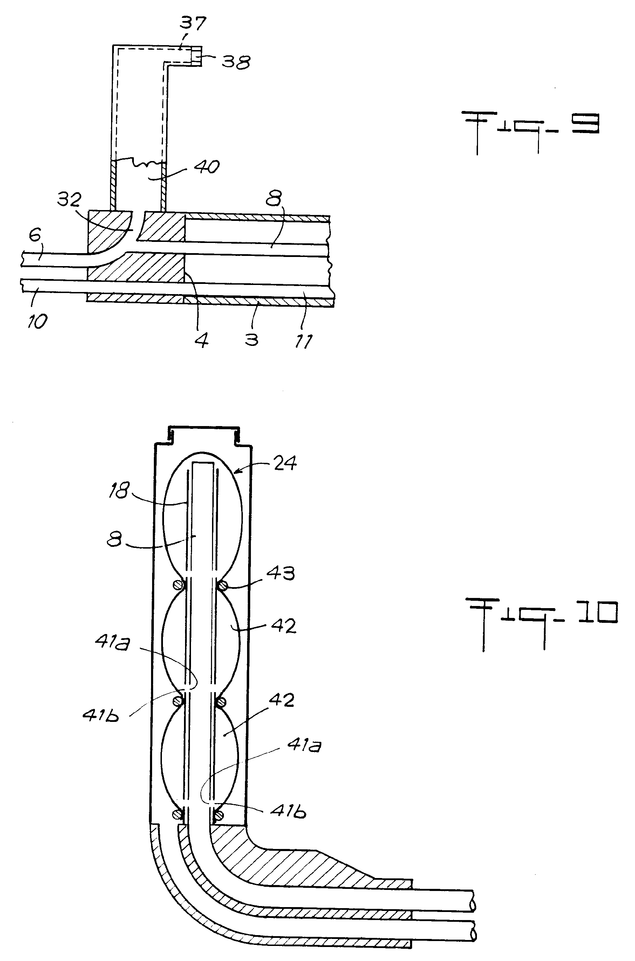

Le dispositif de filtration 1 comprend une chambre de filtration 2 délimitée par une paroi latérale cylindrique 3 et par deux faces d'extrémité 4 et 5 fixées de façon étanche à chaque extrémité de la paroi latérale cylindrique 3. Un conduit d'admission 6, relié à une pompe non représentée sur le dessin aspirant ou refoulant les eaux d'une piscine, débouche au centre 7 de l'une des faces d'extrémité 4 et se prolonge à l'intérieur de la chambre de filtration 2 par un tuyau d'admission 8 disposé dans l'axe de la chambre de filtration 2 et dont l'extrémité libre 9 éloignée du conduit d'admission 5 se trouve au voisinage de l'autre face d'extrémité 5.

Un conduit d'évacuation 10 débouchant sur le bord de la face d'extémité 4 et prolongé à l'intérieur de la chambre de filtration 2 par un tube 11 dont le diamètre diminue à partir de la face d'extrémité 4 et qui comporte dans sa paroi des orifices d'évacuation 12, permet à l'eau aspirée dans la piscine par la pompe et transitant par la chambre de filtration 2 par l'intermédiaire du conduit d'alimentation 6 de retourner vers la piscine.

Le conduit d'admission 6 et le conduit d'évacuation 11 sont scellés de façon étanche dans des alésages appropriés prévus dans la paroi de la face d'extrémité 4.

Un grillage à grosse maille de forme cylindrique est interposé dans la chambre de filtration 2 entre le tuyau d'alimentation 8 et la paroi latérale 3, de façon à séparer la chambre de filtration en deux espaces annulaires coaxiaux 14, 15, le premier 14 délimité par le grillage 13 et le tuyau d'admission 8, le deuxième 15 délimité par le grillage 13 et la paroi latérale 3 et dans lequel loge le tube 11 prolongeant le conduit d'évacuation 10. Le grillage 13 s'étend depuis la face d'extrémité 4 jusqu'à la face d'extrémité 5.

La face d'extrémité 5 comporte une ouverture 16 fermée par vissage d'un couvercle 17, l'ouverture 16 permettant l'accès au premier espace annulaire 14, l'extémité libre 9 du tuyau d'admission 8 se trouvant à peu de distance de cette ouverture 16.

Autour du tuyau d'admission 8 est prévu un tube de guidage 18 ayant un diamètre intérieur légèrement supérieur au diamètre extérieur du tuyau d'alimentation 6 et une longueur légèrement inférieure à la longueur du tuyau d'admission 8, dont la partie d'extrémité 19 située près de la face d'extrémité 4 comporte sur sa paroi extérieure au moins une et de préférence deux protubérances 20a, 20b voisines délimitant entre elles une gorge annulaire 21 dans laquelle sont maintenues, serrées par un cordon de serrage 22, les portions 23 d'un sac en tissu 24 délimitant l'ouverture 25 dudit sac 24. Le tissu constituant le sac 24 est, de préférence, en fibres naturelles ou en tissage aiguilleté.

Le sac 24 est réalisé de préférence dans un tissu éponge et il a une forme générale rectangulaire et présente une surface S supérieure à la surface de la paroi interne de la grille cylindrique 13. Le fond 26 du sac 24 est disposé entre la face d'extrémité 5 et l'extrémité libre 9 du tuyau d'admission 8, au droit de l'ouverture 16 de cette face d'extrémité 5.

Le sac 24 est disposé en accordéon dans le premier espace annulaire 14, et étant en fibres naturelles ou en tissu aiguilleté, les superpositions éventuelles de plis n'empêchent pas l'eau de traverser le sac 24.

L'eau à traiter pénètre dans le sac 24 par l'extrémité libre 9 du tuyau d'admission 8, puis traverse le sac 24 qui est plaqué contre la paroi interne du grillage 13. Le rôle du grillage 13 est de retenir le sac 24 et de créer le deuxième espace annulaire 15 permettant la circulation de l'eau filtrée vers les ouvertures d'évacuation 12 ménagées dans la paroi du tube 11 prolongeant le conduit d'évacuation 10. Le grillage est réalisé de façon avantageuse à partir d'un grillage en matière plastique à grosses mailles en relief et est enroulé par exemple sur deux tours concentriques pour former un cylindre. Le grillage 13 ainsi construit peut avantageusement être disposé contre la paroi latérale cylindrique 3 de la chambre de filtration 2, augmentant ainsi le volume du premier espace annulaire 14 au détriment du deuxième espace annulaire 15.

La dimension des mailles du tissu doit être suffisamment petite pour retenir la poudre de diatomées dont on peut se servir pour avoir une meilleure filtration. L'avantage du tissu éponge est d'éviter l'accolement serré entre deux surfaces adjacentes et de permettre par les longs poils, un drainage de type capillaire qui augmente considérablement la surface de filtration et donc le débit du dispositif de filtration à volume égal.

La forme du sac 24 est celle d'un vaste rectangle et comme il est tassé en accordéon dans le premier espace annulaire 14, ses dimensions peuvent être telles que sa surface S soit quatre à cinq fois supérieure à celle de la surface de la paroi interne du grillage 13. L'orifice du sac rectangulaire 24 peut être rétréci par une couture 27 en forme d'entonnoir de manière à ce que le sac 24 présente une ouverture 25 permettant au moins le passage du tube de guidage 18 et de la protubérance 20a et le retournement du sac 24 pour le lavage. Le collet 28 du sac 24 comporte de préférence un chemin de passage 29 pour le cordon de serrage 22.

Les moyens de fermeture et d'ancrage du sac 24 sur le tube de guidage 18 constitués par la gorge 21 et le cordon 22 peuvent comporter en plus ou être remplacés par un deuxième cordon de serrage 30 passant par des oeillets 31a prévus aux extrémités libres de pattes souples 31, en grillage fin par exemple, fixées à l'extrémité 19 du tube de guidage 18 située à l'extérieur du sac 24. Les pattes souples 31 peuvent être retournées sur le collet 28 du sac 24 disposé dans la gorge 21 ou autour du tube de guidage 18.

Le dispositif de filtration 1 est réalisé de préférence avec des tubes en PVC fixés par collage aux plaques formant les faces d'extrémité 4 et 5 et les conduits d'alimentation 6 et d'évacuation 7 sont raccordés aux canalisations correspondantes de la piscine par des tuyaux souples.

De façon à diminuer au démarrage de la pompe le coup de boutoir, il est prévu en dérivation du conduit d'alimentation 6 un tuyau 32 prolongé par une boucle verticale 33. La boucle 33 comporte un arceau supérieur 34 réalisé dans un tube en matière transparente et souple et une branche inférieure 35 disposée dans l'axe de la partie amont du conduit d'alimentation 6. Un manomètre 36 est monté sur la branche inférieure 35. La boucle 33 contient au démarrage de l'air, et, si besoin est, elle peut être purgée par un orifice 37 muni d'un capuchon de fermeture 38, de façon à visualiser l'effet du coup de boutoir deux boules flottantes colorées 39a et 39b sont prévues dans l'arceau supérieur 34.

La boucle verticale 33 peut être remplacée par une poche à air verticale 40 disposée au-dessus de la face d'extrémité 4 de la chambre de filtration 2.

Le dispositif de filtration 1 décrit ci-dessus est prévu pour être disposé à l'horizontale.

Le dispositif de filtration 1 peut également être disposé à la verticale, la face d'extrémité 4 fixée aux conduites d'alimentation 6 et d'évacuation 10 étant de préférence disposée en bas. Dans ce cas, la poudre de diatomée a tendance à se déposer dans la partie basse du sac 24 c'est-à-dire près de son ouverture 25. Pour y remédier on peut ménager des ouvertures de passage 41a et 41b en correspondance dans le tuyau d'alimentation 8 et le tube de guidage 18 et au voisinage de la face d'extrémité 4 et obturer l'extrémité libre 9 du tuyau d'admission. On peut également créer des poches artificielles 42 dans le sac 24 par des anneaux de caoutchouc 43 enserrant le sac 24, chaque poche communiquant avec la conduite d'admission par des ouvertures 41a, 41b ménagées en correspondance tout au long du tuyau d'admission 8 et du tube de guidage 18.

Le changement de l'élément filtrant constitué par le sac 24 et le tube de guidage 18 se comprend aisément.

Après avoir dévissé le couvercle 17, le dispositif de filtration étant hors fonction, il suffit d'agripper d'une main le fond 26 du sac 24 qui se trouve près de l'ouverture 16 de la face d'extrémité 5 et extraire le sac 24 du premier espace annulaire 14. Le tube de guidage 18 coulisse le long du tuyau d'admission 8 et sort de la chambre de filtration 2 en même temps que le sac 24. Il suffit ensuite de dénouer les cordons de serrage 22 et 30 pour désolidariser le sac 24 et le tube de guidage 18. Le sac 24 peut alors être nettoyé de manière connue par lavage, puis remonté sur le tube de guidage 18, et installé de nouveau dans le premier espace annulaire 12 par coulissement du tube de guidage 18 sur le tuyau d'admission 8. Après vissage du couvercle 17 sur la face d'extrémité 4, le dispositif est de nouveau en état de fonctionnement.

La figure 8 montre une variante particulièrement avantageuse du sac 24 et du mode de fixation du sac 24 sur le tube de guidage 18. Dans cette variante les protubérances 20a et 20b sont prévues sur un embout annulaire 50 emboîtable sur la partie d'extrémité 19 du tube de guidage 18. Cet embout 50 présente un épaulement annulaire 51 sur sa face cylindrique intérieure qui forme une butée sur l'extrémité 19 du tube de guidage 18, et empêche l'embout 50 de coulisser le long du tube de guidage 18. Le sac 24 est fixé sur cet embout 50, comme cela a été indiqué ci-dessus, par un cordon de serrage 22. Comme on le voit sur cette figure 8, le sac 24 est fermé à son extrémité opposée à l'embout 50 par un lacet 52 coulissant dans un collet 53. Cette disposition facilite le lavage du sac. En effet, après avoir retiré le sac 24 muni du tube de guidage 18 de la chambre 2, il est possible de défaire le lacet 52, puis de sortir le tube 18 du sac 24 en le déboîtant de l'embout 50.

on peut alors laver le sac 24 et en particulier le débarrasser des boues qu'il contient, en introduisant un jet d'eau par l'une des extrémités du sac 24, et, de préférence, par l'ouverture du fond, l'eau s'évacuant alors par l'alésage interne de l'embout 50. On peut également retourner le sac 24 pour compléter son lavage. La remise en place du sac 24 se fait de la manière inverse en emboîtant le tube de guidage 18 dans l'embout 50 et en fermant l'ouverture du fond de sac en serrant le lacet 52.

Diverses variantes peuvent être apportées aux dispositifs de filtration décrits ci-dessus. En particulier, plusieurs dispositifs de filtration 1 peuvent être branchés sur la même pompe de façon à augmenter la surface de filtration des éléments filtrants, les dispositifs élémentaires étant placés soit en parallèle soit tête bêche. De même le conduit d'évacuation 10 peut être monté au voisinage de l'ouverture 16 sur la plaque d'extrémité 5 disposée en regard de l'extrémité libre 9 du tuyau d'admission 8.

## Revendications

1. Dispositif de filtration destiné notamment à, l'épuration des eaux de piscine et du type comportant :
- une chambre de filtration (2) délimitée par une paroi latérale cylindrique (3) et deux faces d'extrémité (4, 5) opposées,
- un conduit d'alimentation (6) et un conduit d'évacuation (10) débouchant dans ladite chambre de filtration (2), le conduit d'alimentation (6) débouchant sensiblement au centre (7) de l'une desdites faces d'extrémité (4), et
- un élément filtrant interposé dans ladite chambre de filtration (2) entre le conduit d'alimentation (6) et le conduit d'évacuation (10), à travers lequel circulent les eaux à traiter introduites dans ladite chambre de filtration (2) par ledit conduit d'alimentation (6) et évacuées, après traitement, par ledit conduit d'évacuation (10), l'autre desdites faces d'extrémité (5) étant séparable pour permettre l'accès à la chambre de filtration pour changer ledit élément filtrant, caractérisé en ce qu'il comporte en plus :
- un tuyau d'admission (8) prolongeant le conduit d'admission (6) dans la chambre de filtration (2) et dont l'extrémité libre (9) se trouve au voisinage de l'autre desdites faces d'extémité (5),
- un grillage à grosse maille (13) de forme cylindrique interposé axialement entre ledit tuyau d'admission (8) et la paroi latérale (3) de ladite chambre de filtration (2) et partageant celle-ci en un premier espace annulaire (14) délimité par ledit tuyau d'admission (8) et ledit grillage (13) et un deuxième espace annulaire (15) délimité par ledit grillage (13) et ladite paroi latérale (3) et dans laquelle débouche le conduit d'évacuation (10),
- en ce que l'élément filtrant est constitué d'un sac (24) en tissu présentant une surface de filtration supérieure à la surface de la paroi interne dudit grillage (13) et contenant, presque en totalité, un tube de guidage (18) dont le diamètre intérieur est légèrement supérieur au diamètre extérieur du tuyau d'admission (8), dont la longueur est égale ou légèrement inférieure à la longueur dudit tuyau d'admission (8) et dont une partie d'extrémité (19) sort par l'ouverture (25) dudit sac (24), le collet (28) dudit sac (24) entourant ladite ouverture (25) étant appliqué contre ledit tube de guidage (18) par des moyens de fermeture et d'ancrage,
- et en ce que ledit élément filtrant est placé dans ledit premier espace annulaire (14) de telle manière que ledit tube de guidage (18) entoure ledit tuyau d'admission (8) et que le fond (26) du sac (24) soit disposé entre l'extrémité libre (9) du tuyau d'admission (8) et l'autre desdites faces d'extrémité (5).

2. Dispositif selon la revendication 1 caractérisé en ce que le sac (24) est réalisé dans un tissu en fibres naturelles.

3. Dispositif selon l'une quelconque des revendications 1 et 2, caractérisé en ce que les moyens de fermeture et d'ancrage permettant d'appliquer le collet (28) du sac (24) contre le tube de guidage (18) comportent au moins une protubérance annulaire (20a) formée sur la paroi externe du tube de guidage (18) et servant d'épaulement audit collet (28) maintenu serré contre ledit tube de guidage (18) par un cordon de fermeture (22).

4. Dispositif selon la revendication 3, caractérisé en ce que les moyens de fermeture et d'ancrage comportent deux protubérances voisines (20a, 20b) délimitant entre elles une gorge annulaire (21) sont formées sur le tube de guidage (18) et en ce que le collet (28) du sac (24) loge dans ladite gorge (21).

5. Dispositif selon l'une quelconque des revendications 1 à 4, caractérisé en ce que les moyens de fermeture et d'ancrage du sac (24) sur le tube de guidage (18) sont constitués par un embout annulaire (50) emboîtable sur l'extrémité (19) du tube de guidage (18), ledit embout présentant deux protubérances annulaires (20a, 20b) sur sa paroi externe et étant muni d'un épaulement annulaire (51) formant butée, et en ce que le fond du sac (24) est muni d'une ouverture obturable.

6. Dispositif selon l'une quelconque des revendications 1 à 5 caractérisé en ce que le tube de guidage (18) et le tuyau d'alimentation (8) comportent des ouvertures de passage (41a, 41b) ménagées en correspondance sur toute leur longueur.

7. Dispositif selon l'une quelconque des revendications 1 à 6, caractérisé en ce que le conduit d'évacuation (10) débouche sur le bord de la face d'extrémité (4) portant le tuyau d'alimentation (8), et en ce qu'il est prolongé dans le deuxième espace annulaire (15) par un tube (11) dont le diamètre décroît à partir de ladite face d'extrémité (4) et qui comporte dans sa paroi une pluralité d'orifices d'évacuation (12).

8. Dispositif selon l'une quelconque des revendications 1 à 7, caractérisé en ce qu'il comporte en plus un tuyau souple formant une boucle verticale (33), disposée en dérivation du conduit d'admission (6) et dans l'axe de la partie amont de celui-ci et destiné à amortir le coup de boutoir dû au démarrage du dispositif.

9. Dispositif selon l'une quelconque des revendications 1 à 8, caractérisé en ce que le sac (24) présente, dans son fond, un lacet de fermeture (52) coulissant dans un collet (53).

10. Dispositif selon l'une quelconque des revendications 1 à 9 caractérisé en ce que le sac (24) est réalisé dans un tissu éponge.

## Patentansprüche

1. Filteranordnung, insbesondere zum Reinigen des Wassers von Schwimmbädern, bestehend aus
- einer Filterkammer (2), welche durch eine zylindrische Wandung (3) sowie zwei gegenüberliegende Endflächen (4,5) begrenzt ist,
- Zu- und Ableitrohre (6,7), welche in die Filterkammer (2) einmünden, wobei die Zuführleitung (6) im wesentlichen in die Mitte (7) von einer der Endflächen (4) einmündet, sowie
- einen zwischen der Zuführleitung (6) und dem Ableitrohr (10) innerhalb der Filterkammer (2) angeordneten Filterelement (24), durch welches das über die Zuführleitung (6) in die Filterkammer (2) eingeleitete und nach der Behandlung über das Ableitrohr (10) abgeleitete Wasser hindurchführbar ist,
wobei die andere Endfläche (5) im Hinblick auf einen Zugang in die Filterkammer (2) und zum Auswechseln des Filterelementes (24) abnehmbar ist, dadurch **gekennzeichnet**, daß dieselbe folgende zusätzliche Elemente aufweist:
- ein Zuführrohr (8), welches innerhalb der Filterkammer (2) die Zuführleitung (6) verlängert, wobei ihr freies Ende (9) bis in die Nähe der anderen Endfläche (5) ragt,
- ein grobmaschiges zylindrisches Gitter (13), welches zwischen dem Zuführrohr (8) und der äußeren zylindrischen Wandung (3) der Filterkammer (2) eingesetzt ist, und welches die Filterkammer (2) in einen durch das Zuführrohr (8) und das zylindrische Gitter (13) begrenzten inneren Ringraum 14 und einen durch das zylindrische Gitter (13) und die äußere Wandung (3) begrenzten äußeren Ringraum (15) trennt, in welchen das Ableitrohr (10) einmündet,
- und daß das Filterelement durch einen Stoffsack (24) gebildet ist, welcher eine im Vergleich zur Innenfläche des zylindrischen Gitters (13) größere Filteroberfläche aufweist und welcher beinahe über seine gesamte Länge ein Führungsrohr (18) enthält, dessen Innendurchmesser geringfügig größer als der Außendurchmesser des Zuführrohres (8) ist, wobei die Länge dieses Führungsrohres gleich oder geringfügig kleiner als die Länge des Zuführrohres (8) ist, und wobei das Endstück (19) dieses Führungsrohres (18) durch eine Öffnung (25) des Stoffsackes (14) herausragt, während der die Öffnung (25) umgebende Ringbund (28) des Stoffsackes (24) mit Hilfe von Verschluß- und Haltemitteln an dem Führungsrohr (18) befestigt ist,
- und daß das Filterelement derart in den inneren Ringraum (14) eingesetzt ist, daß das Führungsrohr (18) des Zuführrohr (8) umgibt, während der Bodenbereich (26) des Stoffsackes (24) zwischen dem freien Ende (9) des Zuführrohres (8) und der anderen Endfläche (5) zu liegen gelangt.

2. Filteranordnung nach Anspruch 1, dadurch **gekennzeichnet**, daß der Stoffsack (24) aus einem aus natürlichen Fasern bestehenden Gewebe besteht.

3. Filteranordnung nach Anspruch 1 oder 2, dadurch **gekennzeichnet,** daß die Verschluß- und Haltemittel, mit welchen der Ringbund (28) des Stoffsackes (24) gegenüber dem Führungsrohr (18) gehalten ist, wenigstens einen auf der Außenwandung des Führungsrohres (18) vorgesehenen Ringansatz (20) aufweist, welcher eine Schulter bildet, an der der durch einen Spannstrick (22) gegen das Führungsrohr (18) gedrückte Ringbund (28) zum Anliegen gelangt.

4. Filteranordnung nach Anspruch 3, dadurch **gekennzeichnet**, daß die Verschluß- und Haltemittel aus zwei entlang des Führungsrohres (18) vorgesehenen benachbarten Ringnuten (20a,20b) bestehen, zwischen welchen eine Ringnut (21) gebildet ist, und daß der Ringbund (28) des Stoffsackes (24) innerhalb dieser Ringnut (21) zu liegen gelangt.

5. Filteranordnung nach einem der Ansprüche 1 bis 4, dadurch **gekennzeichnet**, daß die gegenüber dem Führungsrohr (18) wirksamen Verschluß- und Haltemittel durch ein Rohrstück (50) gebildet sind, welches auf das freie Ende (19) des Führungsrohres (18) aufsteckbar ist, und daß dieses Rohrstück (50) auf seiner Außenfläche zwei Ringansätze (20a,20b) aufweist, während im Bereich seiner Innenfläche eine als Anschlag wirkende Ringschulter (51) vorhanden ist, wobei der Bodenbereich des Stoffsackes (24) zusätzlich mit einer verschließbaren Öffnung versehen ist.

6. Filteranordnung nach einem der vorangegangenen Ansprüche, dadurch **gekennzeichnet**, daß das Führungsrohr (18) und Zuführrohr (8) zusätzlich entlang ihrer gesamten Länge mit Durchlaßöffnungen (41a,41b) versehen sind.

7. Filteranordnung nach einem der vorangegangenen Ansprüche, dadurch **gekennzeichnet**, daß das Ableitrohr (10) im Außenbereich der das Zuführrohr (8) tragenden Endfläche (4) einmündet, und daß dieses Zuführrohr (10) innerhalb des äußeren Ringraumes (15) durch ein Rohrelement (11) verlängert ist, dessen Durchmesser von der Endfläche (4) her abnimmt, wobei innerhalb der Wandung dieses Rohrelementes (11) eine Mehrzahl von Öffnungen (12) vorgesehen sind.

8. Filteranordnung nach einem der vorangegangenen Ansprüche, dadurch **gekennzeichnet**, daß dieselbe zusätzlich einen aus biegsamen Rohren gefertigten vertikalen Rohrbügel (33) aufweist, welcher von der Zuführleitung (6) abzweigt, und welcher beim Anschalten der Filteranordnung der Absorption von Wasserschlägen dient.

9. Filteranordnung nach einem der vorangegangenen Ansprüche, dadurch **gekennzeichnet**, daß der Stoffsack (24) in seinem Bodenbereich zusätzlich einen Ringbund (53) aufweist, durch welchen ein Verschlußstrick (52) geführt ist.

10. Filteranordnung nach einem der vorangegangenen Ansprüche, dadurch **gekennzeichnet**, daß der Stoffsack (24) aus einem Schaumstoffgewebe besteht.

## Claims

1. Filtering device intended in particular for the purification of swimming-pool water, and of the type comprising:
- a filtering chamber (2) defined by a cylindrical lateral wall (3) and two end faces (4, 5) in facing relationship,
- a supply conduit (6) and a draining conduit (10) issuing into said filtering chamber (2), the supply conduit (6) issuing substantially in the center (7) of one of said end faces (4), and
- a filtering element interposed in said filtering chamber (2) between the supply conduit (6) and the draining conduit (10), through which flows the water to be treated introduced into said filtering chamber (2) through said supply conduit (6) and drained out, after treatment, through said draining conduit (10), the other of said end faces (5) being separable to allow access to the filtering chamber in order to change said filtering element, characterized in that it further comprises:
- an inlet pipe (8) extending from the supply conduit (6) into the filtering chamber (2) and of which the free end (9) is situated close to the other of said end faces (5),
- a wide-meshed netting (13) of cylindrical shape interposed axially between said inlet pipe (8) and the lateral wall (3) of said filtering chamber (2) and dividing the latter into a first annular space (14) defined by said inlet pipe (8) and said netting (13) and a second annular space (15) defined by said netting (13) and said lateral wall (3) and into which issues the draining conduit (10),
- and in that the filtering element is constituted of a bag (24) made of cloth and having a filtering surface greater than the surface of the internal wall of said netting (13) and containing nearly the totality of a guiding tube (18) of which the internal diameter is slightly greater than the external diameter of the inlet pipe (8), the length is equal to or slightly less than the length of said inlet pipe (8) and one end portion (19) extends out of the opening (25) of said bag (24), the collar (28) of said bag (24) around said opening (25) being applied against said guiding tube (18) by closing and anchoring means,
- and in that said filtering element is placed in said first annular space (14) in such a way that said guiding tube (18) encircles said inlet pipe (8) and that the bottom (26) of the bag (24) is placed between the free end (9) of the inlet pipe (8) and the other of said end faces (5).

2. Device according to claim 1, characterized in that the bag (24) is produced in a cloth made of natural fibers.

3. Device according to any one of claims 1 and 2, characterized in that the closing and anchoring means enabling the collar (28) of the bag (24) to be applied against the guiding tube (18) comprise at least one annular protuberance (20a) formed on the external wall of the guiding tube (18) and acting as shoulder for said collar (28) held tightly against said guiding tube (18) by a closing cord (22).

4. Device according to claim 3, characterized in that the closing and anchoring means comprise two adjacent protuberances (20a, 20b) which define between them an annular groove (21) and which are formed on the guiding tube (18) and in that the collar (28) of the bag (24) is housed in said groove (21).

5. Device according to any one of claims 1 to 4, characterized in that the means for closing and anchoring the bag (24) on the guiding tube (18) are constituted by an annular endpiece (50) which can be fitted over the end (19) of the guiding tube (18), said endpiece having two annular protuberances (20a, 20b) on its external wall and being provided with an annular shoulder (51) forming abutment, and in that the bottom of the bag (24) is provided with an obturable opening.

6. Device according to any one of claims 1 to 5, characterized in that the guiding tube (18) and the inlet pipe (8) comprise passage openings (41a, 41b) provided in corresponding fashion throughout their length.

7. Device according to any one of claims 1 to 6, characterized in that the draining conduit (10) issues on the edge of the end face (4) carrying the inlet pipe (8), and in that it is extended in the second annular space (15) by a tube (11) whose diameter decreases from said end face (4) and which comprises in its wall a plurality of draining orifices (12).

8. Device according to any one of claims 1 to 7, characterized in that it further comprises a flexible pipe forming a vertical loop (33), disposed so as to bypass the supply conduit (6) and along the axis of the upstream part thereof, and designed to dampen the hammer blows due to the starting of the device.

9. Device according to any one of claims 1 to 8, characterized in that the bag (24) is provided, in its bottom, with a closing cord (52) sliding inside a collar (53).

10. Device according to any one of claims 1 to 9, characterized in that the bag (24) is produced from terry cloth.
